# EUROPEAN PATENT SPECIFICATION

(11) **EP 0 905 010 B1**
(45) Date of publication and mention of the grant of the patent: **05.12.2001**
(21) Application number: 98118201.7
(22) Date of filing: 20.09.1995
(51) Int. Cl.: B62D 51/00

(54) **Operation lever unlocking mechanism**
Betätigungshebel Entriegelungsmechanik
Manettes d'actionnement mécanismes de déblocage

(30) Priority: 29.09.1994 JP 25911594; 02.11.1994 JP 29403494
(43) Date of publication of application: 31.03.1999
(62) Divisional of application: 95114801.4
(73) Proprietor: STARTING INDUSTRIAL CO., LTD., Tokyo 167 (JP)
(72) Inventor: Tsunoda, Shuhei, Gunma-gun, Gunma-ken (JP); Shimizu, Keizo, Annaka-shi, Gunma-ken (JP); Kaneniwa, Toshimichi, Takasaki-shi, Gunma-ken (JP); Shibasaki, Minoru, Kitagunma-gun, Gunma-ken (JP)
(74) Representative: Sperling, Rüdiger, Dipl.-Ing.

(56) References cited:
- AU-B- 440 748
- GB-A- 959 112
- US-A- 4 167 221

## Description

The present invention relates to a lever device for controlling the operation of an agricultural machine, or the like, and particularly relates to an unlocking mechanism for locking the operation lever in an operation state and unlocking the locked state quickly.

GB 959 112 A comprises the features mentioned in the preamble of claim 1 of the present application.

Generally, an operation lever for controlling an operation mechanism such as a clutch mechanism, a braking mechanism, an engine mechanism, or the like, is mounted on a handle shaft of an agricultural machine such as a cultivator, a binder, a rice-planter, a rice-harvester, a mowing machine, or the like. The operation lever and the aforementioned mechanism are connected by means of a control wire so that the operation of the mechanism is controlled by pulling the operation lever upward by fingers while gripping a handle shaft. Further, a locking mechanism is known in which a lock lever locks the operation lever when the operation lever is required to be kept in the pulled state.

As for the conventional operation lever locking mechanism, the lock lever auxiliarily mounted under the operation lever is pulled up in the same manner as the operation lever to thereby lock the operation lever. Further, unlocking is made by pulling up the lock lever again or by forcedly pushing down the operation lever.

Because the lock lever and the operation lever are disposed below the handle shaft and because there is little space between an operation handle and the handle shaft, however, an operation of pushing down the operation handle while gripping the operation handle by fingers or an operation of pushing down the operation handle by using the outside of fingers is required in order to push down the operation handle. Such an operation is however hardly carried out quickly. Accordingly, the conventional lever device has a disadvantage that a rapid countermeasure is hardly taken in case of emergency.

It is an object of the present invention to provide an unlocking mechanism good in operation property and capable of taking a rapid countermeasure in case of emergency, or the like, to thereby eliminate the aforementioned disadvantage.

In order to achieve the foregoing object, in a lever device in which a mount stay is fixed on a handle shaft of an agricultural machine, an operation lever of an operative mechanism is pivotally mounted on said mount stay so as to be operated up/down turnably, and a drum of a control wire for controlling the operative mechanism is mounted on a lower portion of the operation lever, the unlocking mechanism in the lever device according to the present invention is characterised in that a lock lever for holding the operation lever in an upward turned state is mounted on the operation lever so as to be operated up/down turnably around the drum; that a front portion of the lock lever is urged to turn downward by means of a spring so that the front portion of the lock lever engages with an engagement portion formed in the mount stay when the operation lever is turned upward; and that a finger placing portion is formed at a rear portion of the lock lever so that the finger placing portion projects toward a side of the handle shaft when the lock lever engages with the engagement portion, the front portion of the lock lever being disengaged from the engagement portion of the mount stay when the finger placing portion is pressed against the spring force so that the lock lever is turned downward.

Preferably, the finger placing portion is located above the operation lever when the front portion of the lock lever engages with the engagement portion.

In such a configuration, when the operation lever is pulled to turn upward, the lock lever is turned upward around the drum by spring force so that the front portion of the lock lever engages with the engagement portion of the mount stay. Accordingly, the operation lever is locked in an upward turned state so as to be kept in this state without turning downward even in the case where the hold of the operation lever is released.

When the finger placing portion of the lock lever projecting toward a side of the handle shaft is pushed down against the spring force of the aforementioned spring by the thumb of the fingers gripping the handle shaft, the front portion of the lock lever is disengaged from the aforementioned engagement portion and the aforementioned lock is forcedly unlocked so that the operation lever returns to its initial position.

These and other objects of the present invention will be seen by reference to the following description of the preferred embodiments, taken in conjunction with the accompanying drawings, in which:
Fig. 1 is an explanatory view at the time of locking an operation lever of a lever device according to the present invention;
Fig. 2 is a sectional view taken along the line X-X in Fig. 1; and
Fig. 3 is an explanatory view at the time of unlocking the aforementioned lever device;
Fig. 4 is an exploded perspective view of a lever turn-stop mechanism in the aforementioned lever device;
Fig. 5 is a perspective view of another example of the turn-stop member;
Fig. 6 is a sectional view of another example of the turn-stop mechanism.

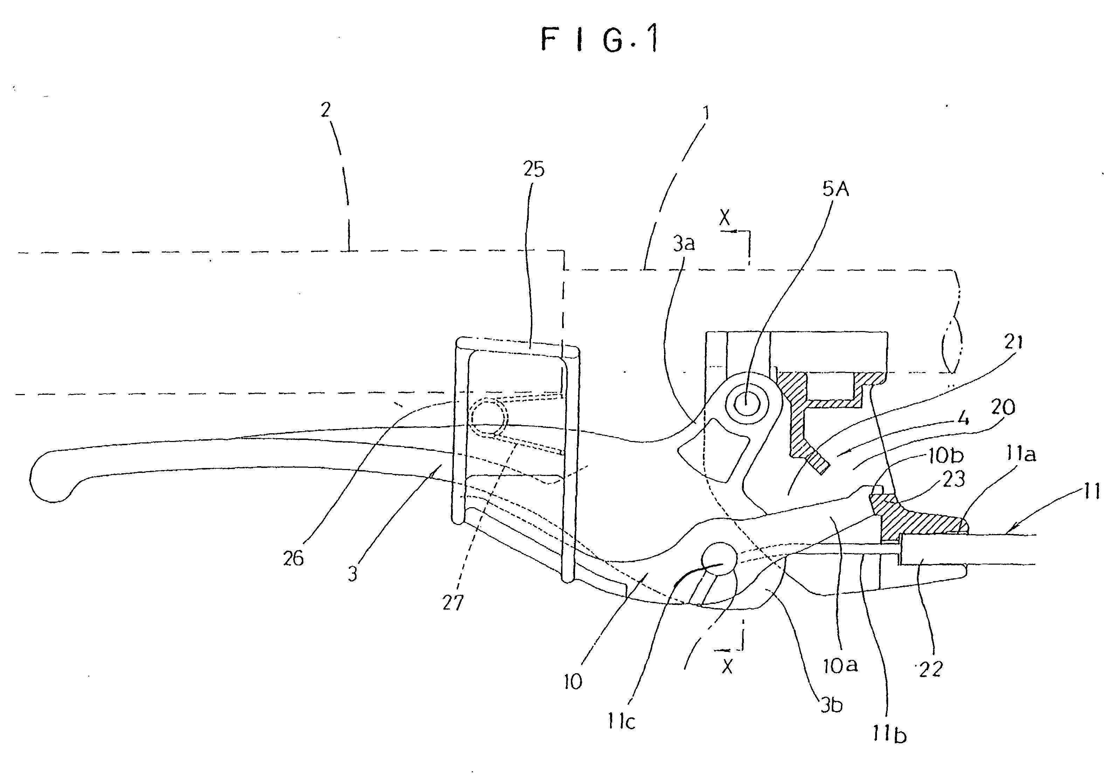

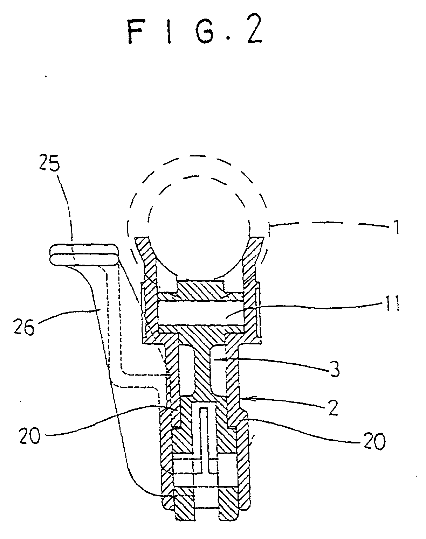

Figs. 1 and 2 show a lever device according to the present invention.

The reference numeral 1 designates a handle shaft which is provided in a tiller (not shown) of an agricultural machine such as a cultivator, a binder, a rice-planter, a rice-harvester, a mowing machine, or the like, and the reference numeral 2 designates a grip. A mount stay 4 is fixed to the handle shaft 1, and an operation lever 3 is pivotally mounted on the mount stay 4 so as to be operated up/down turnably in the drawings. Incidentally, each of the mount stay 4 and the operation lever 3 is made from synthetic resin.

The mount stay 4 is fixed to a lower portion of the handle shaft 1 by a fixing band not shown.

A housing portion 21 for receiving the operation lever 3 is formed between opposite side walls 20 of the mount stay 4 so that the housing portion 21 is opened both in the front and in the rear. Rotation shafts 5A are respectively provided on opposize side walls of the housing portion 21 at its upper portion. An engagement groove 22 for an outer wire 11a of a control wire 11 is formed in the front portion of the housing portion 21, and a hook-like engagement portion 23 is formed in the upper portion of the housing portion 21.

The operation lever 3 is a clutch lever for transmitting the motive power of the tiller to an operating mechanism of a work machine or disconnecting the motive power therefrom. Front upper portions 3a of the operation lever 3 are pivotally mounted on the respective rotation shafts 5A of the housing portion 21 of the mount stay 4. Further, a portion 24 for receiving a drum 11c formed at an end portion of an inner wire 11b of the aforementioned control wire 11 is formed in a front lower portion 3b of the operation lever 3. The other end portion of the control wire 11 is connected to a clutch mechanism. Accordingly, the inner wire 11b of the control wire 11 is pulled out when the operation lever 3 is pulled to turn upward, so that the aforementioned associated operating mechanism operates correspondingly. The control wire 11 is returned to the initial position when the hand is released from the operation lever 3, so that the operation of the operating mechanism stops.

Next, a lock lever 10 of synthetic resin is attached to a side portion of the aforementioned operation lever 3. This lock lever 10 serves to hold the aforementioned operation lever 3 in an upward turned state. The lock lever 10 is attached so as to be able to turn up/down around the aforementioned drum llc. A front portion 10a of the aforementioned lock lever 10 is extended to the front, and an engagement groove 10b is formed at the front end thereof. On the other hand, a finger placing portion 25 is formed in the rear portion of the lock lever 10. This finger placing portion 25 is shaped like a flat plate at the upper end of an erection portion 26 expending upward.

A spring 27 is disposed between the erection portion 26 and the operation lever 3, so that the lock lever 10 is always urged to turn upward relative to the operation lever 3 by the spring force of the spring 27.

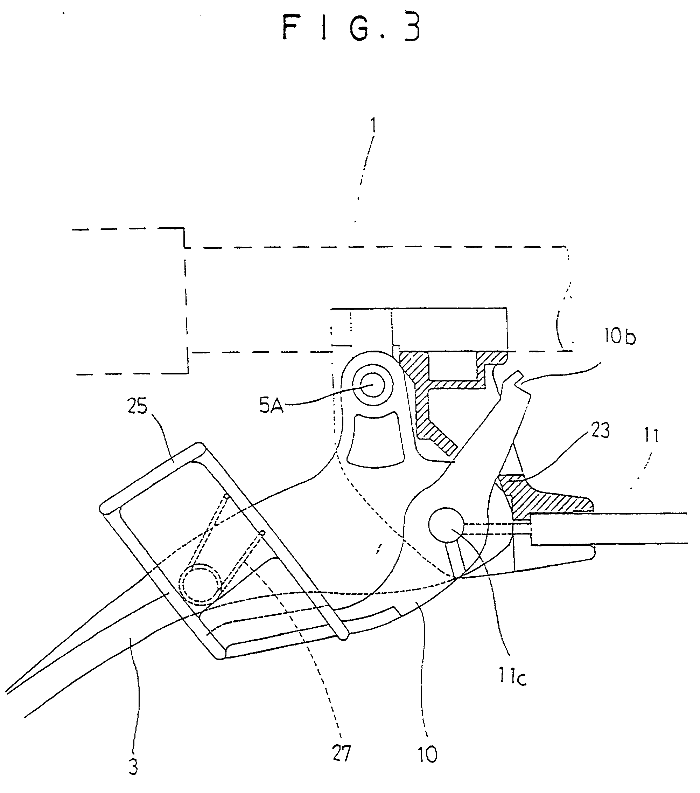

According to the aforementioned configuration, the operation lever 3 is normally located in a lower position as shown in Fig. 3. When the operation lever 3 is pulled to turn upward as shown in Fig. 1, the lock lever 10 is turned clockwise around the drum 11c by the force of the spring 27, so that the engagement groove 10b at the front end thereof automatically engages with the engagement portion 23 of the mount stay 4. Consequently, the operation lever 3 is locked in an upward turned state so as to be kept in this state without turning downward even in the case where the hand is released from the operation lever 3. In this occasion, the lock lever 10 projects toward a side of the handle shaft 1.

When the aforementioned finger placing portion 25 is pushed down against the spring force of the aforementioned spring 27 as shown in Fig. 3 by the thumb of the fingers gripping the handle shaft 1, the lock lever 10 turns counterclockwise. Accordingly, the aforementioned engagement groove 10b is disengaged from the engagement portion 23 so that the aforementioned lock is forcedly unlocked and the operation lever 3 turns downward to go back to its initial position. In this occasion, the lock lever 10 never turn clockwise because the midsection of the front portion 10a of the lock lever 10 comes into contact with the engagement portion 23 though the spring force acts on the lock lever 10.

Incidentally, it is a matter of course that the operation lever is not limited to such a clutch lever. The operation lever may be a brake lever, a throttle lever, or the like.

According to the present invention, the operation lever can be unlocked in case of emergency, and this unlocking operation can be achieved by placing the thumb of the fingers gripping the handle shaft on the finger placing portion and pushing it down. Because the finger placing portion projects to a side of the handle shaft, the thumb can be placed on the finger placing portion rapidly to thereby make a quick operation possible. Accordingly, it is possible to rapidly cope with the case of emergency, or the like, to unlock the operation lever.

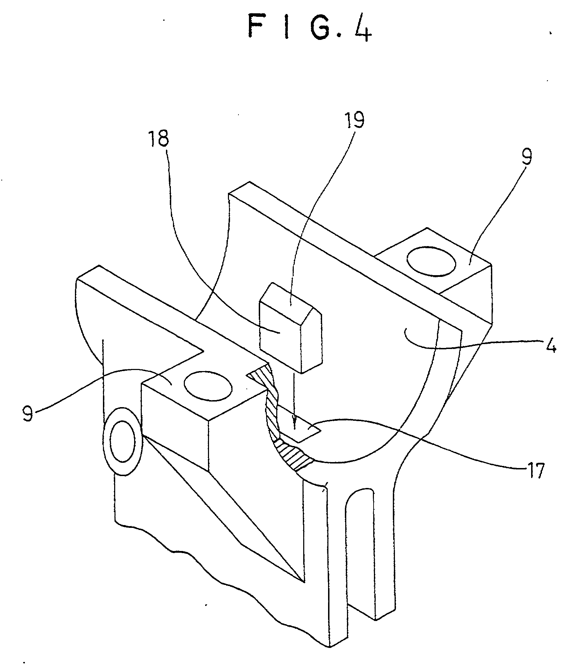

Hereupon, as shown in Fig. 4, a concave portion 17 is formed in the inner surface of the mount stay 4 contacting the surface of the aforementioned handle shaft 1. A turn-stop member 18 is fitted into the concave portion 17. The turn-stop member 18 is formed from a hard material such as a metal, or the like. A protruding portion 19 which is shaped like a triangle in section and which is sharp so as to be able to bite into the surface of the aforementioned handle shaft 1 is formed at a top end of the turn-stop member 18.

Therefore, according to the aforementioned configuration, the protruding portion 19 at the top end of the turn-stop member 18 bites into the surface of the handle shaft 1 when the mount stay 4 is tightened and fixed onto the band even if the tightening force is not so strong. Accordingly, when force of rotation around the handle shaft 1 is exerted on the mount stay 4 at the time of operating the lever 3, or the like, the biting of the turn-stop member 18 effectively prevents the mount stay 4 from turning. Accordingly, even in the case of a mount stay 4 formed from synthetic resin, aluminum, or the like, the mount stay 4 is securely prevented from turning, so that a smooth lever operation can be carried out.

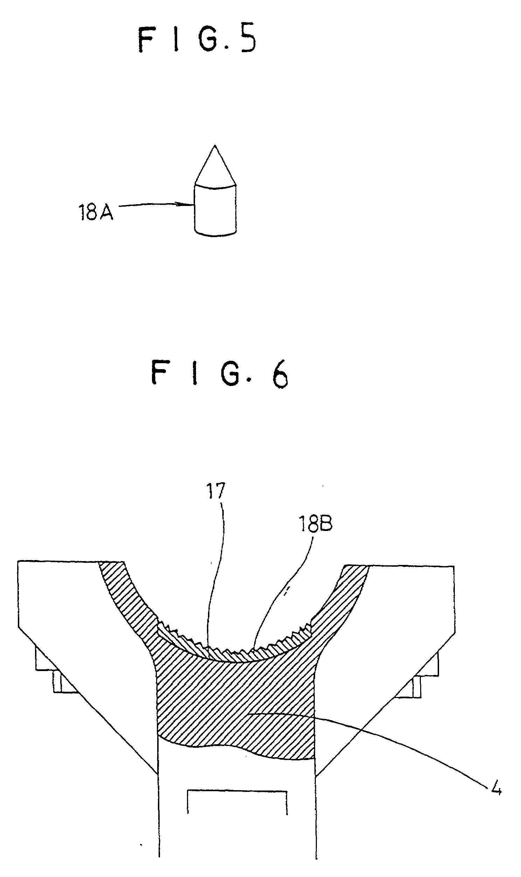

Incidentally, the turn-stop mechanism is not limited to the aforementioned embodiment. For example, as shown in Fig. 5, the turn-stop member 18 may be made to have a shape of a combination of a cylinder and a cone.

Alternatively, as shown in Fig. 6, the turn-stop member 18 may be shaped like a plate member 18B having a rough surface.

Further, the turn-stop mechanism may be applied to any lever such as a brake lever, etc. other than the clutch lever and the turn-stop mechanism may be disposed not on the mount stay 4 but on the band. That is, the concave portion 17 may be formed in the inner surface of the band so that the aforementioned turn-stop member 18 is fitted into the concave portion 17.

## Claims

1. A lever device in which a mount stay (4) is fixed on a handle shaft (1) of an agricultural machine, an operation lever (3) of an operation mechanism is pivotally mounted on said mount stay (4) so as to be operated up/down turnably, and a drum (11c) of a control wire (11) for controlling said operation mechanism is mounted on a lower portion of said operation lever (3);
an operation lever unlocking mechanism provided in said lever device, **characterized in:**
**that** a lock lever (10) for holding said operation lever in an upward turned state is mounted on said operation lever so as to be operated up/down turnably around said drum;
**that** a front portion (10b) of said lock lever is urged to turn downward by means of a spring (27) so that said front portion of said lock lever engages with an engagement portion (23) formed in said mount stay when said operation lever is turned upward; and
**that** a finger placing portion (25) is formed at a rear portion of said lock lever so that said finger placing portion projects toward a side of said handle shaft when said lock lever engages with said engagement portion, said front portion of said lock lever being disengaged from said engagement portion of said mount stay when said finger placing portion is pressed against the spring force so that said lock lever is turned downward.

2. A lever device according to claim 1, wherein said finger placing portion (25) is located above said operation lever (3) when said front portion of said lock lever (10) engages with said engagement portion.

3. A lever device according to claim 1 or 2, **characterized in that**
a band is disposed on one side of a handle shaft portion (1) for operating an agricultural machine and a mount stay (4) is disposed on the other side of the handle shaft for supporting an operation lever are clamped and fixed through clamp bolts (16),
a concave portion (17) is formed in an inner surface of either cne of said band and said stay contacting with a surface of said handle shaft, and a turn-stop member (18, 18A, 18B) having a protruding portion (19) capable of biting into the surface of said handle shaft is fitted in said concave portion.

## Patentansprüche

1. Hebelvorrichtung, bei der eine Halterung (4) an einem Handgriffschaft (1) einer landwirtschaftlichen Maschine befestigt ist, ein Betätigungshebel (3) eines Betätigungsmechanismus schwenkbar an der Halterung (4) befestigt ist, so daß er nach oben/unten schwenkbar bedienbar ist, und ein Nippel (11c) eines Steuerdrahtes (11) zur Steuerung des Betätigungsmechanismus an einem unteren Abschnitt des Betätigungshebels (3) angebracht ist;
ein Betätigungshebelentriegelungsmechanismus in der Hebelvorrichtung vorgesehen ist, **dadurch gekennzeichnet,**
**daß** ein Verriegelungshebel (10) zum Halten des Betätigungshebels in einem nach oben geschwenkten Zustand an dem Betätigungshebel so angebracht ist, daß er um den Nippel nach oben/unten schwenkbar bedienbar ist;
**daß** ein Vorderabschnitt (10b) des Verriegelungshebels durch eine Feder (27) so nach unten schwenkend beaufschlagt ist, daß der Vorderabschitt des Verriegelungshebels mit einem Eingriffsabschnitt (23) in Eingriff kommt, der in der Halterung (4) gebildet ist, wenn der Betätigungshebel nach oben geschwenkt wird; und
**daß** ein Fingeranlegeabschnitt (25) an einem hinteren Abschnitt des Verriegelungshebels gebildet ist, so daß der Fingeranlegeabschnitt zu der Seite des Handgriffschaftes vorragt, wenn der Verriegelungshebel mit dem Eingriffsabschnitt in Eingriff steht, wobei der Vorderabschnitt des Verriegelungshebels außer Eingriff mit dem Eingriffsabschnitt der Halterung kommt, wenn der Fingeranlegeabschnitt gegen die Federkraft gedrückt wird, so daß der Verriegelungshebel nach unten geschwenkt wird.

2. Hebelvorrichtung nach Anspruch 1, bei welcher der Fingeranlegeabschnitt (25) über dem Betätigungshebel (3) befindlich ist, wenn der Vorderabschnitt des Verriegelungshebels (10) mit dem Eingriffsabschnitt in Eingriff steht.

3. Hebelvorrichtung nach Anspruch 1 oder 2, **dadurch gekennzeichnet, daß**
ein Band auf einer Seite eines Handgriffschaftabschnitts (1) zur Bedienung einer landwirtschaftlichen Maschine angeordnet ist und eine Halterung (4) auf der anderen Seite des Handgriffschaftes zum Haltern eines Betätigungshebels angeordnet ist, welche durch Klemmschrauben (16) geklemmt und fixiert sind,
ein konkaver Abschnitt (17) in einer inneren Oberfläche des Bandes oder der Halterung, die mit einer Oberfläche des Handgriffschaftes in Berührung steht, gebildet ist und ein Drehstoppelement (18, 18A, 18B), das einen vorspringenden Abschnitt (19) hat, der in der Lage ist, in die Oberfläche des Handgriffschaftes einzugreifen, in den konkaven Abschnitt eingesetzt ist.

## Revendications

1. Un dispositif à levier dans lequel un membre de support (4) est fixé sur la poignée (1) d'une machine agricole, un levier de commande (3) d'un mécanisme de commande est monté pivotant sur le membre de support (4) de manière à permettre un actionnement par rotation dans le sens haut/bas, et un tambour (11c) d'un câble de commande (11) pour commander le mécanisme de commande est monté à la partie inférieure du levier de commande (3);
un mécanisme de déverrouillage du levier de commande est intégré dans le dispositif à levier, **caractérisé en ce**
**qu'**un levier verrou (10) servant à bloquer le levier de commande en position haute est monté sur le levier de commande de manière à pouvoir être actionné par pivotement dans le sens haut/bas autour du tambour;
**que** la section avant (10b) du levier verrou est forcée vers le bas par un ressort (27) de telle manière que lorsque le levier de commande est actionné vers le haut la section avant du verrou s'engage dans une section d'engrènement (23) formée dans membre de support; et
**qu'**une section pose-doigt (25) est formée à l'arrière du levier verrou de telle manière qu'elle se trouve en saillie vers un côté du manche (1) lorsque le levier verrou s'engage dans la section d'engrènement; la section avant du levier verrou se désengage de la section d'engrènement du membre de support (4) lorsque la section pose-doigt est pressée contre le ressort entraînant l'abaissement du levier verrou.

2. Un dispositif à levier selon la revendication 1, dans lequel la section pose-doigt (25) se trouve au-dessus du levier de commande (3) lorsque la section avant du levier verrou (10) s'engage dans la section d'engrènement.

3. Un dispositif à levier selon la revendication 1 ou 2, **caractérisé en ce qu'**un étrier est monté d'un côté de la poignée de commande (1) d'une machine agricole et le membre de support (4) de l'autre côté de la poignée, servant de support à un levier de commande, sont solidarisés par boulons de fixation (16);
une section concave (17) est formée à la surface intérieure d'un côté quelconque de l'étrier et du support en contact avec une surface de la poignée, et un élément de rotation/blocage (18, 18A, 18B) est logé dans la section concave et possède une section en saillie (19) apte à mordre dans la surface de la poignée.
